# EUROPEAN PATENT APPLICATION

(11) **EP 4 831 520 A1**
(43) Date of publication of application: **28.10.2026**
(21) Application number: 26171894.4
(22) Date of filing: 13.04.2026
(51) Int. Cl.: F16K 31/40, F16F 9/46

(54) **ELECTROMAGNETIC RELIEF VALVE AND HYDRAULIC DAMPER**

(30) Priority: 23.04.2025 CN 202510514923
(71) Applicant: BeijingWest Industries Co. Ltd., 102400 Beijing (CN)
(72) Inventor: SARAPATA, Mateusz Szymon, 34-105 Wysoka, Sloneczna 115, Poland (PL); SEMKOWICZ, Milosz Pawel, 34-200 Sucha Beskidzka, Billy Wildera 14/20, Poland (PL); STUDZINSKI, Tomasz, 30-693 Kraków, Bochenka 12A/64, Poland (PL)
(74) Representative: Lukaszyk, Szymon

(57) **Abstract**

An electromagnetic relief valve and a hydraulic damper. The electromagnetic relief valve includes a main valve (11), a pilot valve (12) and an electromagnet (13). The electromagnet configured to apply, in response to different currents applied thereto, an electromagnet force of different magnitudes to the pilot cone (122). The pilot cone is configured to open or cut off the fluid communication between the second orifice and the second liquid outlet by moving in response to a change in the electromagnet force, so as to cause a change in a fluid pressure of working fluid in the piston chamber. The piston (112) is configured to open or cut off the fluid communication between the liquid inlet and the first liquid outlet by moving in response to the change in the fluid pressure in the piston chamber.

## Description

### Cross-Reference to Related Applications

This application claims priority to Chinese Patent Application No. 202510514923.7, filed on April 23, 2025, which is hereby incorporated by reference in its entirety.

### Technical Field

The present disclosure relates to the field of vehicle damping technologies, and particularly to an electromagnetic relief valve and a hydraulic damper.

### Background of the Invention

Unless otherwise indicated herein, approaches described in this section are not prior art to the appended claims, and are not admitted as prior art by inclusion in this section.

With advances in automotive technology and increasing consumer demands for ride comfort and handling performance, there is a growing market demand for shock absorbers with adjustable damping forces. Conventional shock absorbers tend to have fixed damping force settings that cannot be adjusted for different driving conditions, which limits the performance of the vehicle under different road conditions

To address this issue, a variety of shock absorber designs with adjustable damping forces have emerged in recent years. These designs usually realize realtime adjustment of damping force by integrating an electronic control system and a precision valve mechanism inside the shock absorber. These valve mechanisms can be automatically adjusted based on data collected by sensors to adapt to different driving conditions, such as road conditions, vehicle loads, and driving styles.

### Summary of the invention

It is an object of the present disclosure to provide an electromagnetic relief valve and a hydraulic damper to solve the problem pointed out in the above background or other similar problems.

According to embodiments of the first aspect of the present disclosure, there is provided an electromagnetic relief valve, including a main valve, a pilot valve, and an electromagnet. The main valve includes a liquid inlet, a first liquid outlet, and a piston for cutting off or opens fluid communication between the liquid inlet and the first liquid outlet. The piston includes a piston chamber and a first orifice that fluidly communicates the piston chamber with the liquid inlet. The pilot valve includes a second orifice, a second liquid outlet, and a pilot cone for cutting off or opens fluid communication between the second orifice and the second liquid outlet. The second orifice is in fluid communication with the piston chamber. The electromagnet is configured to apply, in response to different currents applied thereto, an electromagnet force of different magnitudes to the pilot cone. The pilot cone is configured to open or cut off the fluid communication between the second orifice and the second liquid outlet by moving in response to a change in the electromagnet force, so as to cause a change in a fluid pressure of working fluid in the piston chamber. The piston is configured to open or cut off the fluid communication between the liquid inlet and the first liquid outlet by moving in response to the the change in the fluid pressure in the piston chamber.

According to embodiments of the second aspect of the present disclosure, there is provided a hydraulic damper, including: at least one electromagnetic relief valve according to the embodiments of the first aspect of the present disclosure, an inner tube, a piston assembly, a base valve assembly, an intermediate tube, and an outer tube. The inner tube is disposed along a center line and provided with a communication hole. The piston assembly is slidably disposed in the inner tube along the center line and attached to a piston rod. The piston rod leads to an exterior of the hydraulic damper through a sealed piston rod guide. The piston assembly divides the inner tube into a rebound chamber and a compression chamber. The piston assembly comprises a first compression valve assembly and a first rebound valve assembly to control the flow of working fluid passing between the rebound chamber and the compression chamber. The base valve assembly is located at an end of the compression chamber, and is provided with a second compression valve assembly and a second rebound check valve assembly to control the flow of working fluid passing between the compression chamber and the reservoir chamber. The intermediate tube is disposed radially outside the inner tube, and an annular chamber is formed between the intermediate tube and the inner tube. Both ends of the intermediate tube are in sealed connection with the inner tube, and the annular chamber is communicated with the rebound chamber through the communication hole disposed in the inner tube. The intermediate tube is provided with an outlet communicated with the annular chamber. The outer tube is disposed radially outside the intermediate tube, and a reservoir chamber is formed between and the outer tube and the intermediate tube. The at least one electromagnetic relief valve is located outside the outer tube and attached thereto. The liquid inlet of the electromagnetic relief valve is communicated with the outlet, and the first liquid outlet and the second liquid outlet of the electromagnetic relief valve are communicated with the reservoir chamber.

The present disclosure aims to provide a new design scheme for adjusting the damping force of a shock absorber to improve the handling performance and ride comfort of a vehicle, while simplifying the adjustment process to make it easier to maintain and adapt to different driving needs.

### Brief description of the drawings

For a clearer illustration of technical features in the embodiments of the present disclosure or the prior art, a brief description of the drawings for the embodiments or the prior art will be given below. The drawings described below involve only some embodiments of this disclosure. For those of ordinary skill in the art, other drawings can be derived from these drawings without any inventive efforts. In the drawings:
FIG. 1 illustrates a structural diagram of an electromagnetic relief valve according to an embodiment of the present disclosure;
FIG. 2 illustrates a structural diagram of an electromagnetic relief valve in a closed state according to an embodiment of the present disclosure;
FIG. 3 illustrates a structural diagram of an electromagnetic relief valve in an open state according to an embodiment of the present disclosure;
FIG. 4 illustrates a structural diagram of an electromagnetic relief valve in a fail-safe mode according to an embodiment of the present disclosure;
FIG. 5 illustrates a partial diagram of FIG. 4;
FIG. 6 illustrates a structural diagram of an electromagnetic relief valve according to another embodiment of the present disclosure;
FIG. 7 illustrates a structural diagram of a hydraulic damper with an electromagnetic relief valve according to an embodiment of the present disclosure;
FIG. 8 illustrates a graph showing the relationship between a piston rod displacement and a damping force of a damper, which is obtained by performing a damping force test on an electromagnetic relief valve without an elastic retainer, in which a pilot valve of the electromagnetic relief valve cannot be completely closed;
FIG. 9 illustrates a graph showing the relationship between a piston rod displacement and a damping force of a damper, which is obtained by performing a damping force test on an electromagnetic relief valve without an elastic retainer, in which a pilot valve of the electromagnetic relief valve can be completely closed; and
FIG. 10 illustrates a graph showing the relationship between a piston rod displacement and a damping force of a damper, which is obtained by performing a damping force test on an electromagnetic relief valve including an elastic retainer.

### Description of Embodiments

For a better understanding of the technical features of the present disclosure, a clear and complete description of the embodiments of the present disclosure will be set forth with reference to the drawings. The described embodiments are only a part, rather than all, of the embodiments of the present disclosure. All other embodiments derived by persons skilled in the art from the embodiments of the present disclosure without making inventive efforts shall fall within the scope of the present disclosure.

The embodiments of the present disclosure will be described below with reference to the drawings.

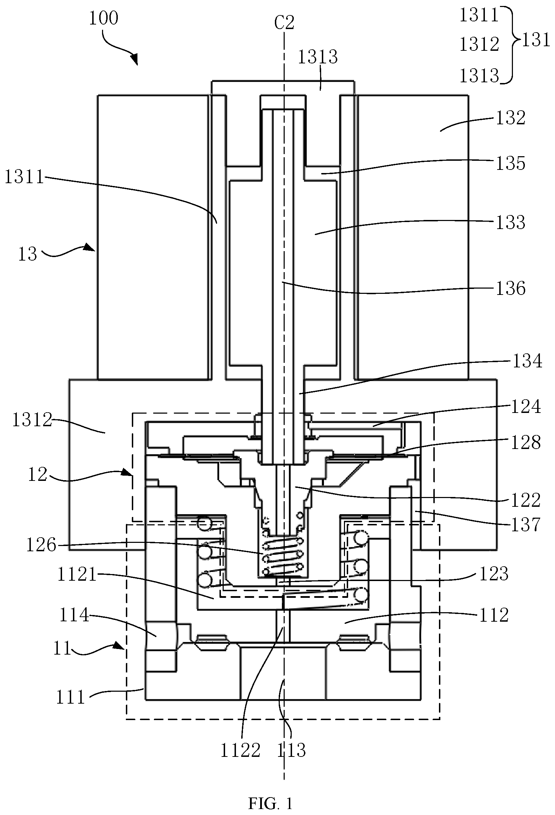

Unless otherwise indicated, the upward and downward directions mentioned herein shall be based on those shown in Figure 1 of the present disclosure, which are described herein together.

According to embodiments of a first aspect of the present disclosure, there is provided an electromagnetic relief valve 100 for mounting on a hydraulic damper 200, and may serve as a part of the hydraulic damper 200, or as an additional member matched with the hydraulic damper 200 rather than a part of the hydraulic damper 200. The electromagnetic relief valve 100 of the embodiments of the present disclosure is used to adjust the damping force of the hydraulic damper 200.

The structure and operating principle of the hydraulic damper 200 will be first explained exemplarily with reference to the drawings.

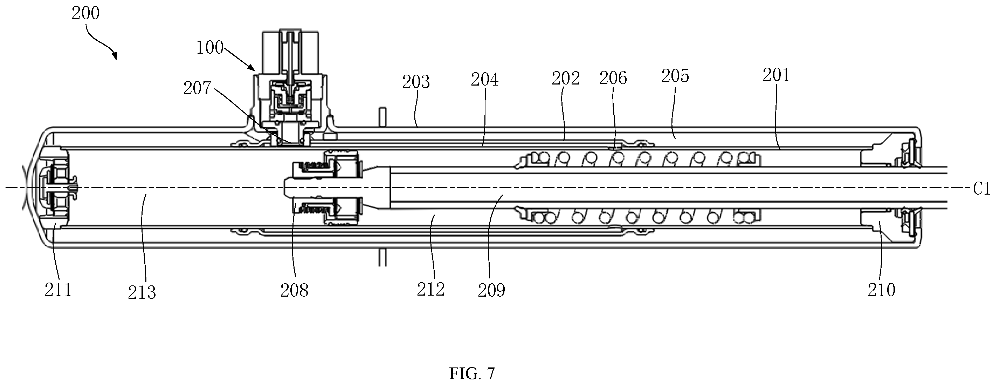

FIG. 7 exemplarily illustrates a schematic diagram of a hydraulic damper 200. The hydraulic damper 200 may be attached to a vehicle chassis (not illustrated).

Referring to FIG. 7, the hydraulic damper 200 includes an inner tube 201, an intermediate tube 202 and an outer tube 203 which are sequentially disposed from inside to outside, and these three tubes are all disposed along a center line C1. Thus, the damper 200 illustrated in FIG. 7 may be referred to as a triple-tube hydraulic damper 200. The outer tube 203 may also be referred to as a reservoir tube.

Referring to FIG. 7 again, an annular chamber 204 is formed between the intermediate tube 202 and the inner tube 201, and both ends of the intermediate tube 202 are in sealed connection with an outer side surface of the inner tube 201, respectively, so as to seal both ends of the annular chamber 204. A reservoir chamber 205 is formed between the intermediate tube 202 and the outer tube 203. In the example of FIG. 7, the length of the intermediate tube 202 is less than the length of the inner tube 201 and the length of the outer tube 203, so that a middle portion of the reservoir chamber 205 is located between the intermediate tube 202 and the outer tube 203, and two end portions of the reservoir chamber 205 are located between the inner tube 201 and the outer tube 203. The tube wall of the inner tube 201 is provided with a communication hole 206, which is communicated with the annular chamber 204. The tube wall of the intermediate tube 202 is provided with an outlet 207, which is communicated with the annular chamber 204 and is used to connect the annular chamber 204 to a liquid inlet 113 of the electromagnetic relief valve 100, which will be described in detail later.

Continuing to refer to FIG. 7, the inner tube 201 is internally provided with a piston assembly 208, which is slidable along the center line C1 and attached to a piston rod 209, and the piston rod 209 passes through a sealed piston rod guide 210 to the outside of the damper 200. The damper 200 further includes a base valve assembly 211 fixed at one end of the inner tube 201. The piston assembly 208 is in sliding fit with an inner surface of the inner tube 201, and divides the inner tube 201 into a rebound chamber 212 and a compression chamber 213. The rebound chamber 212 is located between the piston assembly 208 and the piston rod guide 210, and the compression chamber 213 is located between the piston assembly 208 and the base valve assembly 211. The rebound chamber 212 is communicated with the communication hole 206 on the tube wall of the inner tube 201, that is, the rebound chamber 212 is in fluid communication with the annular chamber 204 through the communication hole 206.

The term "compression" as used herein with reference to particular elements of the damper 200 refers to these elements or parts of elements that are adjacent to or face the compression chamber 213 or, in a case of working liquid flow direction, it refers to this flow direction that takes place during the compression stroke of the damper 200. Similarly, the term "rebound" as used in this specification with reference to particular elements of the damper 200 refers to these elements or these parts of particular elements that are adjacent to or face the rebound chamber 212 or, in a case of working liquid flow direction, it refers to this flow direction that takes place during the rebound stroke of the damper 200.

Referring to FIG. 7, the piston assembly 208 includes a first compression valve assembly and a first rebound valve assembly, so as to control the flow of working fluid passing between the rebound chamber 212 and the compression chamber 213 as the piston assembly 208 slides along the center line C1. The base valve assembly 211 includes a second rebound check valve assembly configured to allow the working fluid to flow from the reservoir chamber 205 to the compression chamber 213 in order to fill it during a rebound stroke, and a second compression valve assembly configured to allow the working fluid to flow from the compression chamber 213 to the reservoir chamber 205 during a compression stroke of the damper 200.

Referring to FIG. 7, the electromagnetic relief valve 100 is substantially located outside the outer tube 203 and attached to it. The electromagnetic relief valve 100 includes a liquid inlet 113, a first liquid outlet 114 and a second liquid outlet 124. The liquid inlet 113 of the electromagnetic relief valve 100 is communicated with the outlet 207 of the intermediate tube 202. The first liquid outlet 114 and the second liquid outlet 124 of the electromagnetic relief valve 100 as well as a safety outlet 128 described later are all communicated with reservoir chamber 205, so that the working fluid flowing out of electromagnetic relief valve 100 can return to the reservoir chamber 205.

The electromagnetic relief valve 100 according to the embodiments of the present disclosure is capable of independently adjusting the damping force of the damper 200 during the rebound and compression strokes of the damper 200, and the working fluid in the rebound chamber 212 is capable of flowing through the electromagnetic relief valve 100 in a same flow direction all the time independently of the movement direction of the piston rod 209, i.e., the working fluid flows from the rebound chamber, sequentially through the communication hole 206, the annular chamber 204, the outlet 207, and the liquid inlet 113 of the electromagnetic relief valve 100 into the electromagnetic relief valve 100, and then flows out of the first liquid outlet 114 and the second liquid outlet 124 of the electromagnetic relief valve 100 as well as the safety outlet 128 described later and enters the reservoir chamber 205. For the convenience of description, hereinafter this flow direction is referred to as an overflow direction.

The opening and the closing of the electromagnetic relief valve 100 according to the embodiments of the present disclosure is controlled by the magnitude of current being applied.

When a preset maximum current is applied, the electromagnetic relief valve 100 closes and does not allow the working fluid to flow through, and the fluid in the annular chamber 204 within the intermediate tube 202 is blocked. At this time, the electromagnetic relief valve 100 does not regulate the damping force, and the damping force generated by the damper 200 is the maximum (which may be referred to as the maximum damping force).

When the applied current (which may be referred to as a preset lower current) is less than the preset maximum current, the electromagnetic relief valve 100 opens and allows the working fluid to flow along the aforementioned overflow direction, thereby realizing the regulation of the damping force. The greater the preset lower current, the greater the damping force generated by the damper 200 (though still less than the maximum damping force), and vice versa.

It should be understood that the preset maximum current refers to a preset maximum current value causing the electromagnetic relief valve 100 to be closed, and can be set as needed. The preset lower current refers to any current value less than the preset maximum current value-it is not limited to a single specific value but may instead represent a range of current values, and it can also be set as needed.

When the preset lower current is applied to the electromagnetic relief valve 100, during the rebound stroke of the damper 200, the flow direction of the working fluid is as follows:

During the rebound stroke of the damper 200, the piston assembly 208 slides towards the piston rod guide 210, a portion of the working fluid in the reservoir chamber 205 enters the compression chamber 213 via the second rebound check valve assembly of the base valve assembly 211, a portion of the working fluid in the rebound chamber 212 enters the compression chamber 213 via the first rebound valve assembly of the piston assembly 208, and a portion of the working fluid in the rebound chamber 212 passes through the electromagnetic relief valve 100 along the overflow direction, which reduces the rebound damping force. Therefore, the electromagnetic relief valve 100 achieves the regulation of the damping force of the damper 200 during the rebound stroke.

When the preset lower current is applied to the electromagnetic relief valve 100, during the compression stroke of the damper 200, the flow direction of the working fluid is as follows:

During the compression stroke of the damper 200, the piston assembly 208 slides towards the base valve assembly 211, a portion of the working fluid in the compression chamber 213 enters the reservoir chamber 205 via the second compression assembly of the base valve assembly 211, a portion of the working fluid in the compression chamber 213 enters the rebound chamber 212 via the first compression valve assembly of the piston assembly 208, and a portion of the working fluid in the rebound chamber 212 passes through the electromagnetic relief valve 100 along the overflow direction, which reduces the compression damping force. Therefore, the electromagnetic relief valve 100 achieves the regulation of the damping force of the damper 200 during the compression stroke.

The structure and operating principle of the electromagnetic relief valve 100 are exemplarily described below with reference to the drawings.

FIG. 1 exemplarily illustrates a cross-sectional view of an electromagnetic relief valve 100, and for the sake of simplicity, hatching lines are omitted from FIG. 1.

Referring to FIG. 1, the electromagnetic relief valve 100 includes three main parts: a main valve 11, a pilot valve 12, and an electromagnet 13. In the example of FIG. 1, the main valve 11, the pilot valve 12 and the electromagnet 13 are substantially disposed coaxially in sequence along an axis C2, which may be perpendicular to the center line C1 of the damper 200 when the electromagnetic relief valve 100 is mounted on the damper 200.

As mentioned above, the opening and closing of the electromagnetic relief valve 100 according to the embodiments of the present disclosure is controlled by the magnitude of the applied current. Specifically, when the current is applied to the electromagnet 13, the electromagnet 13 applies a force to the pilot valve 12 to drive the pilot valve 12 to close or allow the pilot valve 12 to open, in response to the applied current. The closing and opening of the pilot valve 12 causes a change in the fluid pressure in the main valve 11, and the change in the fluid pressure causes the main valve 11 to close or open.

The structure and working principle of the electromagnet 13 are exemplarily described below with reference to the drawings.

Referring to FIG. 1, the electromagnet 13 includes a housing 131, a coil 132, and a plunger 134 with an armature 133. The plunger 134 and the armature 133 are slidably disposed inside the housing 131 along the axis C2. The armature 133 and the plunger 134 may be an integrated structure or may be formed separately and then connected to each other. The armature 133 extends annularly around the plunger 134. The coil 132 is wound on the outer side surface of the housing 131 and is opposite to the armature 133 in a radial direction. When current is applied to the coil 132, the coil 132 generates a magnetic field. The armature 133 is driven by the magnetic field to drive the plunger 134 to slide towards the pilot valve 12 along the axis C2 to apply a force to the pilot valve 12.

In the example of FIG. 1, the housing 131 extends annularly around the axis C2. The housing 131 defines a magnet cavity 135, in which the plunger 134 and the armature 133 are slidably disposed along the axis C2. A lower end of the plunger 134 extends out of the magnet cavity 135 and is inserted into the pilot valve 12. The plunger 134 is internally provided with a through hole 136 that passes through it along the axis C2, that is, the plunger 134 is a hollow structure. Two ends of the through hole 136 are communicated with the magnet cavity 135 and a pilot chamber 126 of the pilot valve 12, respectively, so that the working fluid can enter the magnet cavity 135 from the pilot valve 12 via the hole in the plunger 134 to lubricate the armature 133 and the plunger 134. In addition, the hollow plunger 134 also helps to reduce the sliding resistance to the plunger 134.

Referring to FIG. 1 again, both the main valve 11 and the pilot valve 12 are at least partially embedded in the housing 131 of the electromagnet 13, so that the housing 131 of the electromagnet 13 can hold the main valve 11 and the pilot valve 12. A backflow channel 137 is further formed between the housing 131 of the electromagnet 13 and outer side surfaces of the main valve 11 and the pilot valve 12, and the liquid outlets of the main valve 11 and the pilot valve 12 can be communicated with the liquid storage chamber of the damper 200 through the backflow channel 137.

In the example illustrated in detail in FIG. 1, the housing 131 includes a first annular portion 1311, a second annular portion 1312 and a cover 1313 which are coaxially connected along the axis C2. The inner cavity of the first annular portion 1311 forms a magnet cavity 135, and the top of the first annular portion 1311 is in sealed connection with the cover 1313 that seals the top of the magnet cavity 135. The main valve 11 and the pilot valve 12 are at least partially embedded in the second annular portion 1312, and the plunger 134 passes through the second annular portion 1312 and is inserted into the pilot valve 12. There is a clearance fit between the plunger 134 and the second annular portion 1312, so that the fluid in the magnet cavity 135 can basically not flow out of the clearance therebetween.

The structure and operating principle of the main valve 11 are exemplarily described below with reference to the drawings.

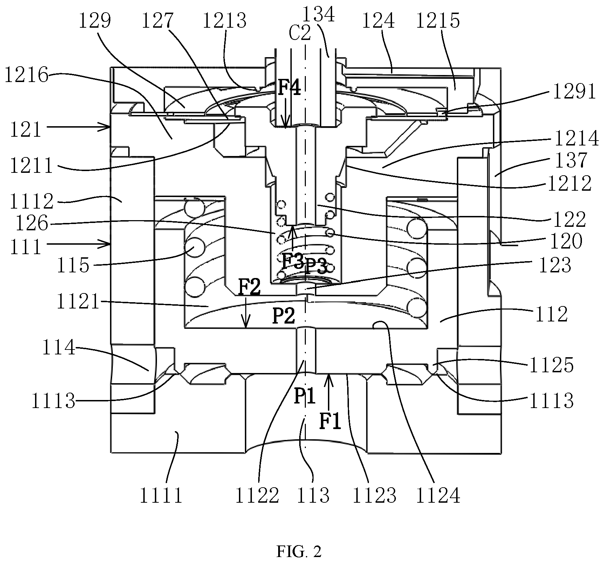

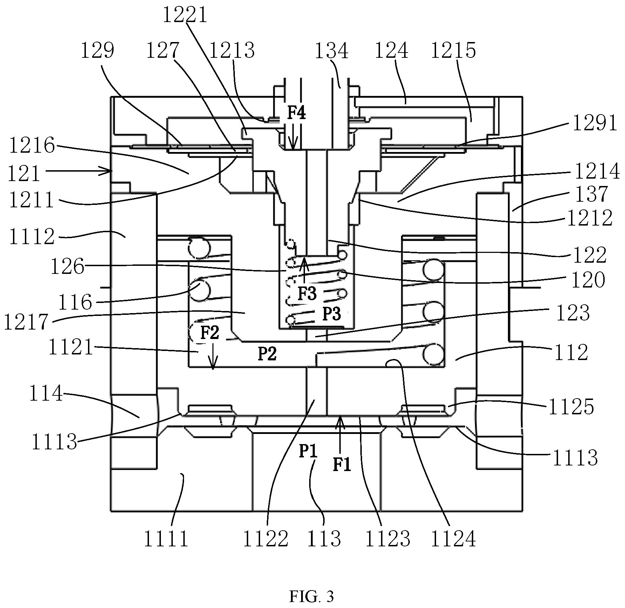

Referring to FIGS. 2 and 3, the main valve 11 includes a main valve housing 111 and a piston 112 slidably disposed in the main valve housing 111 along the axis C2. The liquid inlet 113 and the first liquid outlet 114 of the main valve 11 may be disposed on the main valve housing 111, and the main valve housing 111 and the piston 112 may jointly define a first outflow passage extending from the liquid inlet 113 to the first liquid outlet 114. The piston 112 slides along the axis C2 to abut against or separate from the main valve housing 111 to cut off or open the first outflow passage, thereby cutting off or opening the fluid communication between the liquid inlet 113 and the first liquid outlet 114.

Referring to FIGS. 2 and 3, the piston 112 is internally provided with a piston chamber 1121 which is communicated with the pilot valve 12, and the piston 112 is further provided with a first orifice 1122 which fluidly communicates the piston chamber 1121 with the liquid inlet 113. In the axial direction, the piston chamber 1121 and the liquid inlet 113 are located at two opposite sides of the piston 112, respectively, so that the sliding of the piston 112 can be driven by the forces exerted on the piston 112 by the working fluid from the liquid inlet 113 and the working fluid in the piston chamber 1121. For ease of description, the force exerted on the piston 112 by the fluid pressure P1 of the working fluid from the liquid inlet 113 is referred to as a piston opening force F1, and the force exerted on the piston 112 by a fluid pressure P2 of the working fluid in the piston chamber 1121 is referred to as a piston closing force F2. The direction of the piston closing force F2 is opposite to that of the piston opening force F1.

Referring to FIGS. 2 and 3, the piston chamber 1121 is in fluid communication with the pilot valve 12, that is, the liquid inlet 113, the first orifice 1122, the piston chamber 1121 and the pilot valve 12 are communicated in sequence. Therefore, the closing or the opening of the pilot valve 12 will cause a change in the fluid pressure in the piston chamber 1121, thereby causing a change in the piston closing force F2.

Specifically, referring to FIG. 2, the closing of the pilot valve 12 causes the fluid pressure P2 of the working fluid in the piston chamber 1121 to increase. The increased fluid pressure P2 generates a large piston closing force F2 on the piston 112, which can drive the piston 112 to slide in a direction of cutting off the first outflow passage (the downward direction in FIG. 2, also referred to as a piston closing direction) until the piston 112 abuts against the main valve housing 111, thereby cutting off the first outflow passage (i.e., the main valve 11 is closed).

Then referring to FIG. 3, the opening of the pilot valve 12 causes the fluid pressure P2 of the working fluid in the piston chamber 1121 to decrease. The reduced fluid pressure P2 generates a smaller piston closing force F2 on the piston 112, which allows the piston 112 to slide in a direction of opening the first outflow passage (the upward direction in FIG. 3, also referred to as a piston opening direction) under the driving of the piston opening force F1 until the piston 112 is separated from the main valve housing 111, thereby opening the first outflow passage (i.e., the main valve 11 is opened).

Exemplarily, referring to FIGS. 2 and 3, the piston 112 has a lower pressure-receiving surface 1123 and an upper pressure-receiving surface 1124, which are substantially perpendicular to the axis C2 and opposite to each other. The area of the upper pressure-receiving surface 1124 is larger than that of the lower pressure-receiving surface 1123. The lower pressure-receiving surface 1123 faces the liquid inlet 113 to receive the piston opening force F1, and the upper pressure-receiving surface 1124 faces the piston chamber 1121 to receive the piston closing force F2. Since the area of the upper pressure-receiving surface 1124 is larger than that of the lower pressure-receiving surface 1123, a small increase in the fluid pressure in the piston chamber 1121 can cause the piston 112 to slide in the piston closing direction, thereby realizing rapid closing of the main valve 11 and improving the response speed and sensitivity of the main valve 11 to the pilot valve 12.

Referring to FIGS. 2 and 3, the lower pressure-receiving surface 1123 of the piston 112 and the liquid inlet 113 are opposite to each other in the axial direction, and the cross-sectional area of the liquid inlet 113 may be approximately equal to the area of the lower pressure-receiving surface 1123 of the piston 112. Therefore, the fluid pressure generated by the working fluid entering the liquid inlet 113 can directly act on the entire lower pressure-receiving surface 1123.

Referring to FIGS. 2 and 3, the cross-sectional area of the first orifice 1122 of the piston 112 is much smaller than that of the liquid inlet 113. The aperture of the first orifice 1122 is very small, which can restrict the working fluid entering the first orifice 1122 from the liquid inlet 113, thereby not only generating a damping force, but also preventing the working fluid from entering the piston chamber 1121 in a large amount, which could otherwise interfere with the accurate response of the piston chamber 1121 to the pilot valve 12.

In the examples illustrated in detail in FIGS. 2 and 3, the main valve housing 111 includes a main valve seat 1111 and a main valve cylinder 1112. The main valve seat 1111 is disposed substantially perpendicular to the axis C2. The main valve housing 111 may be fixed to the tube wall of the outer tube 203 of the damper 200. The main valve cylinder 1112 is fixed to the main valve seat 1111 and extends annularly around the axis C2. The liquid inlet 113 of the main valve 11 may be disposed on the main valve seat 1111 and may be an axial hole extending along the axis C2. The first liquid outlet 114 of the main valve 11 may be disposed on a sidewall of the main valve cylinder 1112 and may be a radial hole extending along the radial direction. The first liquid outlet 114 is disposed on the main valve cylinder 1112 adjacent to the main valve seat 1111. A port of an end of the liquid inlet 113 close to the piston 112 may be located on a same radial plane as the first liquid outlet 114 to reduce the flow path of the working fluid from the liquid inlet 113 to the first liquid outlet 114.

In the examples illustrated in detail in FIGS. 2 and 3, a lower surface of the piston 112 is provided with at least one first annular protrusion 1125 extending annularly around the axis C2, and an upper surface of the main valve seat 1111 is provided with at least one second annular protrusion 1113 extending annularly around the axis C2. In the axial direction, the first annular protrusion 1125 and the second annular protrusion 1113 are opposite to each other. In the radial direction, the first annular protrusion 1125 and the second annular protrusion 1113 are located between the liquid inlet 113 and the first liquid outlet 114. The piston 112 and the main valve housing 111 abut against each other through the first annular protrusion 1125 and the second annular protrusion 1113. When the piston 112 slides along the axis C2 until the first annular protrusion 1125 abuts against the second annular protrusion 1113, the first outflow passage is cut off and the main valve 11 is closed. When the piston 112 slides along the axis C2 until the first annular protrusion 1125separates from the second annular protrusion 1113, the first outflow passage is opened and the main valve 11 is opened. FIG. 2 exemplarily illustrates two first annular protrusions 1125 and two second annular protrusions 1113, which is beneficial to effectively and reliably cutting off the first outflow passage.

Referring to FIGS. 2 and 3, the main valve 11 further includes a first elastic member 115, which may be a coil spring, disposed in the piston chamber 1121 along the axis C2. The first elastic member 115 is mainly used to limit the piston 112 when the piston 112 moves in the piston opening direction, so as to prevent the piston 112 from sliding too much and hitting the pilot valve 12. The first elastic member 115 can also apply a piston closing force to the piston 112.

The structure and operating principle of the pilot valve 12 is exemplarily described below with reference to the drawings.

Referring to FIGS. 2 and 3, the pilot valve 12 includes a pilot valve housing 121 and a pilot cone 122 that is slidably disposed in the pilot valve housing 121 along the axis C2. A second orifice 123 and a second liquid outlet 124 may be disposed in the pilot valve housing 121. The pilot valve housing 121 and the pilot cone 122 may jointly define a second outflow passage extending from the second orifice 123 to the second liquid outlet 124. The pilot cone 122 abuts against or separates from the pilot valve housing 121 by sliding along the axis C2 to cut off or open the second outflow passage, thereby cutting off or opening the fluid communication between the second orifice 123 and the second liquid outlet 124. In other words, the pilot cone 122 can open or cut off the fluid communication between the second orifice 123 and the second liquid outlet 124 by moving along the axis C2, thereby changing the fluid pressure in the pilot chamber 126, and further changing the fluid pressure in the piston chamber 1121.

Referring to FIGS. 2 and 3, the pilot cone 122 and the plunger 134 of the electromagnet 13 may be coaxially disposed along the axis C2. In the axial direction, the second orifice 123 and the plunger 134 are located on opposite sides of the pilot cone 122, respectively. In other words, two ends of the pilot cone 122 face the second orifice 123 and the plunger 134 of the electromagnet 13, respectively, so that the sliding of the pilot cone 122 can be driven by the working fluid from the second orifice 123 and the force exerted by the plunger 134 on the pilot cone 122.

In the example illustrated in detail in FIGS. 2 and 3, a pilot chamber 126 jointly defined by the pilot valve housing 121 and the pilot cone 122 is provided in the pilot valve housing 121, and is communicated with the piston chamber 1121 of the piston 112 through the second orifice 123. In the flow direction of the working fluid in the second outflow passage, the pilot cone 122 is located between the pilot chamber 126 and the second outlet 124. The pilot chamber 126 can be regarded as a part of the second outflow passage.

The liquid inlet 113, the first orifice 1122, the piston chamber 1121, the second orifice 123 and the pilot chamber 126 are sequentially communicated, and the working fluid in the piston chamber 1121 can enter the pilot chamber 126 via the second orifice 123. In other words, the pilot chamber 126 can accommodate the working fluid from the second orifice 123, and the working fluid in the pilot chamber 126 can exert pressure on the pilot cone 122 to drive the pilot cone 122 to open. For ease of description, the force exerted on the pilot cone 122 by a fluid pressure P3 of the working fluid in the pilot chamber 126 is referred to as a pilot cone opening force F3, and the force exerted on the pilot cone 122 by the plunger 134 is referred to as an electromagnet force F4 (also called as a pilot cone closing force). The direction of the pilot cone opening force F3 is opposite to that of the electromagnet force F4.

Specifically, referring to FIG. 2, when a preset maximum current is applied to the electromagnet 13, the plunger 134 applies a preset maximum electromagnet force F4 to the pilot cone 122, so as to drive the pilot cone 122 to slide in a direction of cutting off the second outflow passage (the downward direction in FIG. 2, also referred to as a pilot valve closing direction) until the pilot cone 122 abuts against the pilot valve housing 121 ((i.e., the pilot cone 122 blocks the outlet of the pilot chamber 126), thereby cutting off the second outflow passage.

Referring to FIG. 3, when a preset lower current is applied to the electromagnet 13, the plunger 134 applies a preset small electromagnet force F4 to the pilot cone 122, which allows the pilot cone 122 to slide in a direction of opening the second outflow passage (the upward direction in FIG. 3, also referred to as a pilot cone opening direction) under the drive of the pilot cone opening force F3, until the pilot cone 122 is separated from the pilot valve housing 121, thereby opening the second outflow passage (that is, the pilot valve 12 is opened).

It can be understood that applying different preset small currents to the electromagnet 13 will cause the plunger 134 to apply different preset small electromagnet forces to the pilot cone 122, so that different pressures are maintained in the pilot chamber 126 by the pilot cone 122, that is, the pilot cone 122 can maintain different pressures in the pilot chamber 126, which determines different opening amplitudes of the pilot cone 122 for the second outflow passage( i.e., different opening amplitudes of the outflow passage).

The inventors' research found that when the shock absorber operates with high-speed movement of the piston rod, driving the electromagnetic relief valve 100 with a current lower than the maximum value would cause the electromagnetic relief valve 100 to operate unstably and generate vibrations.

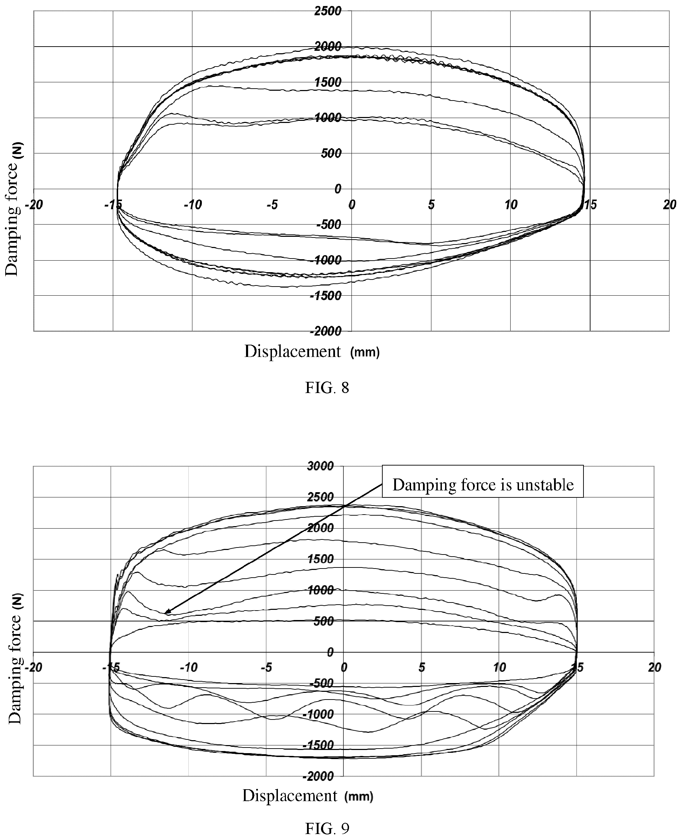

One of the solutions to reduce the operating vibration of the electromagnetic relief valve 100 is to limit the closing of the pilot valve 12, that is, to prevent it from being completely closed. FIG. 8 illustrates the damping force of the damper equipped with the electromagnetic relief valve 100 when the pilot valve 12 cannot be completely closed. The curves in FIG. 8 represent damping forces measured when different currents are applied to the electromagnetic relief valve 100. As can be seen from FIG. 8, although this solution is helpful to improve the operating stability of the electromagnetic relief valve 100, it has a big disadvantage, that is, the electromagnetic relief valve 100 cannot completely close, thus limiting the maximum damping force generated at a high current.

If the closing of the pilot valve 12 is not limited, that is, the pilot valve 12 is allowed to be completely closed, the electromagnetic relief valve 100 will operate unstably. FIG. 9 illustrates the damping force of the damper with the electromagnetic relief valve 100 when the pilot valve 12 can be completely closed; the greater the current, the greater the damping force. The curves in FIG. 9 represent the damping forces measured by applying different currents to the electromagnetic relief valve 100. As can be seen from FIG. 9, if the pilot valve 12 is allowed to be completely closed, the damping force varies greatly, and the operation of the electromagnetic relief valve 100 is unstable.

In order to improve the operating stability of the electromagnetic relief valve 100, an embodiment of the present disclosure provides a new solution, that is, an elastic element is provided to support the pilot cone 122. Therefore, when the electromagnetic relief valve 100 is applied with a preset maximum current, the elastic element bends to allow the pilot valve 12 to be completely closed, so that the shock absorber can generate a maximum damping force. When the electromagnetic relief valve 100 is applied with a current lower than the preset maximum current, the elastic element prompts the pilot valve 12 to open, so that when the shock absorber operates at high speed, the electromagnetic relief valve 100 can also operate stably.

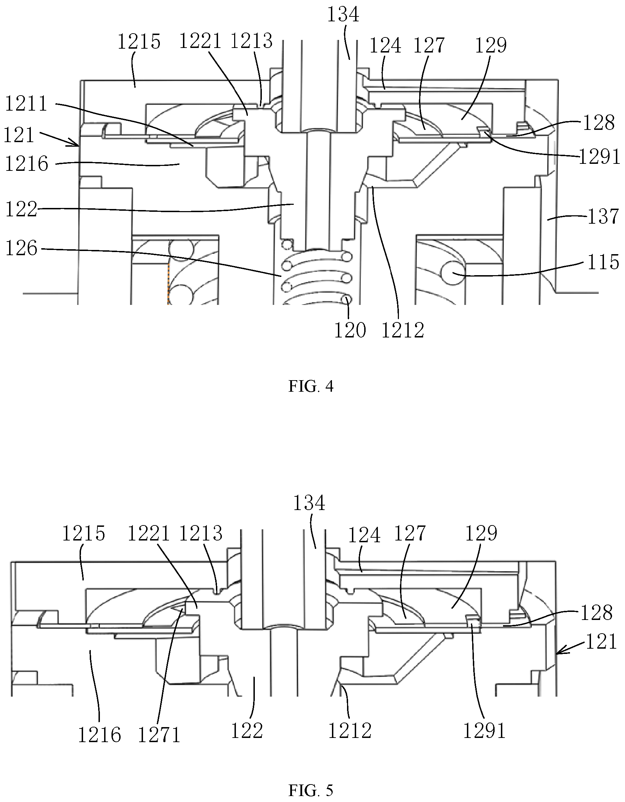

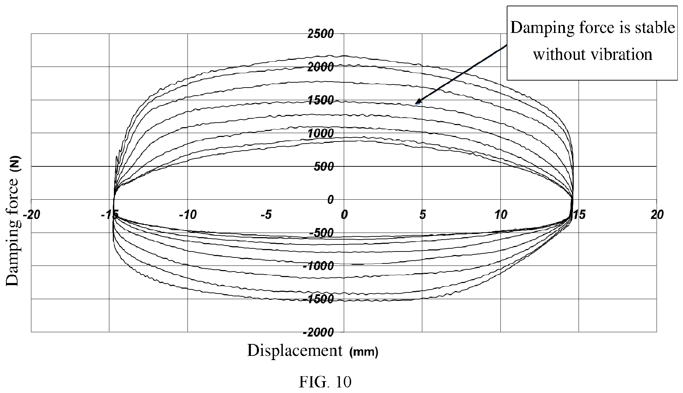

Specifically, referring to FIGS. 4 and 5, the elastic element is an elastic retainer 127, which can provide an elastic retaining force to the pilot cone 122 in the axial direction and at an end of the pilot cone 122 away from the second orifice 123. The elastic retaining force is in the same direction as the pilot cone opening force F3, and in the opposite direction to the electromagnet force F4. The elastic retaining force can assist the pilot cone 122 in opening and can elastically retain the pilot cone 122 in an open position, especially in a position with a large opening amplitude (e.g., when the moving speed of the piston rod 209 is high), without affecting the pilot cone 122 to completely close the pilot valve 12, which is very helpful to improve the operating stability of the electromagnetic relief valve 100. As can be seen from FIG. 10, the electromagnetic relief valve 100 can smoothly adjust the damping force of the damper and reduce vibration and noise.

Continuing to refer to FIGS. 4 and 5, the elastic retainer 127 is located at the end of the pilot cone 122 away from the second orifice 123, and the end of the pilot cone 122 is provided with an annular flange 1221. The pilot valve housing 121 has a supporting surface 1211 opposite to the annular flange 1221 in the axial direction. The elastic retainer 127 is located between the annular flange 1221 and the supporting surface 1211 and may be fixedly attached to the supporting surface 1211.

In the examples illustrated in detail in FIGS. 4 and 5, the elastic retainer 127 is a spring disc, which extends annularly around the pilot cone 122 and is provided with a flow hole 1271 through which the second outflow passage passes. In other examples, the elastic retainer 127 may be a coil spring, a wave spring or any other elastic element.

The inventors' research found that if the function of the electromagnet 13 fails (e.g., the electromagnet 13 itself fails, or a power source supplying current to the electromagnet 13 fails), the electromagnetic relief valve 100 cannot operate, especially cannot adjust the damping force.

Specifically, as illustrated in FIGS. 4 and 5, when the function of the electromagnet 13 fails, i.e., when the electromagnet 13 cannot apply the electromagnet force to the pilot cone 122, since the pilot cone 122 is driven by the fluid pressure in the pilot chamber 126 or by a second elastic member (to be described later) in the pilot chamber 126, the pilot cone 122 cannot remain in any open position in the second outflow passage, but will slide toward the electromagnet 13 until abutting against an end of the pilot valve housing 121 adjacent to the electromagnet 13, which may cause the second outflow passage to be unexpectedly cut off.

In order to improve the working reliability of the electromagnetic relief valve 100, the electromagnetic relief valve 100 according to the embodiments provides a fail-safe mode. Referring to FIGS. 4 and 5, the pilot valve 12 further includes a safety outlet 128, and the pilot valve housing 121 and the pilot cone 122 jointly define a safety outflow passage extending from the second orifice 123 to the safety outlet 128. The extension path of the safety outflow passage is at least partially different from the extension path of the second outflow passage, so that when the second outflow passage is cut off, the safety outflow passage can remain open.

The safety outflow passage and the second outflow passage have a common path, which facilitates the pilot cone 122 to simultaneously cut off the safety outflow passage and the second outflow passage on the common path, thereby completely closing the pilot valve 12. In the examples of FIGS. 4 and 5, the common path includes the pilot chamber 126, and the pilot cone 122 simultaneously cuts off the safety outflow passage and the second outflow passage by abutting against the inner wall of the pilot valve housing 121 located in the pilot chamber 126.

In the examples illustrated in FIGS. 4 and 5, the pilot valve housing 121 includes a first abutment portion 1212 located in the pilot chamber 126, and a second abutment portion 1213 located on the path of the second outflow passage but not on the path of the safety outflow passage. The pilot cone 122 is slidable between the first abutment portion 1212 and the second abutment portion 1213 along the axis C2. The abutment of the pilot cone 122 with the first abutment portion 1212 closes both the second outflow passage and the safety outflow passage, the abutment of the pilot cone 122 with the second abutment portion 1213 closes the second outflow passage and but not close the safety outflow passage, and the separation of the pilot cone 122 from the first abutment portion 1212 and the second abutment portion 1213 at least opens the second outflow passage.

In the examples illustrated in detail in FIGS. 4 and 5, the pilot valve 12 includes a safety orifice disc 129 for providing the safety outlet 128. The safety orifice disc 129 is located on the path of the safety outflow passage and extends annularly around the pilot cone 122. The safety orifice disc 129 is fixedly attached to the pilot valve housing 121 and is provided with an orifice 1291. The orifice 1291 and the pilot valve housing 121 jointly define the safety outlet 128. The damping force in the fail-safe mode can be adjusted by the flow area of the safety outlet 128. The larger the flow area of the safety outlet 128, the smaller the damping force in the fail-safe mode, and vice versa

Exemplarily, in the axial direction, the safety orifice disc 129 is located above the spring disc 127. In the radial direction, the safety orifice disc 129 is located radially outside the annular flange 1221. In the radial direction, the safety outlet 128 may be provided with a plurality of spaced orifices 1291, thereby forming a plurality of safety outlets 128 communicated with the reservoir chamber 205.

Referring to FIG. 1, the pilot valve 12 further includes a second elastic member 120 disposed in the pilot chamber 126. In the axial direction, the pilot cone 122 is located between the plunger 134 of the electromagnet 13 and the second elastic member 120, and the sliding of the pilot cone 122 when the electromagnet 13 fails is at least driven by the second elastic member 120. The second elastic member 120 has a relatively small stiffness, and the elastic force generated by it can assist the fluid pressure in the pilot chamber 126 to drive the pilot cone 122 to slide upward only when the electromagnet 13 fails. When the electromagnet 13 works normally, the elastic force of the second elastic member 120 exerted on the pilot cone 122 can be basically ignored. For example, the second elastic member 120 may be a coil spring.

In the example illustrated in detail in FIGS. 2 and 3, the pilot valve housing 121 includes a pilot valve seat 1214 and a valve cover 1215. The pilot chamber 126 is formed in the pilot valve seat 1214, the pilot cone 122 is located between the pilot valve seat 1214 and the valve cover 1215. The plunger 134 of the electromagnet 13 passes through the valve cover 1215 to apply a force to the pilot cone 122. The pilot valve seat 1214 has an annular protrusion 1216 located outside the pilot chamber 126. In the axial direction, the annular protrusion 1216 is opposite to the annular flange 1221 of the pilot cone 122. The elastic retainer 127 and the safety orifice disc 129 are both fixedly attached to the annular protrusion 1216. The annular protrusion 1216 and the valve cover 1215 can clamp the safety orifice disc 129 therebetween, and the clamped portion of the safety orifice disc 129 is provided with an orifice 1291. Therefore, the orifice 1291, the annular protrusion 1216 and the valve cover 1215 can jointly define the safety outlet 128.

In the examples illustrated in detail in FIGS. 4 and 5, the second liquid outlet 124 is disposed on the valve cover 1215, and extends radially from an inner side surface of the valve cover 1215 to an outer side surface thereof. The second abutment portion 1213 is disposed on a surface of the valve cover 1215 facing the annular flange 1221, and extends annularly along the axis C2. Therefore, when the pilot cone 122 abuts against the second abutment portion 1213 through the annular flange 1221, the fluid cannot flow from between the lower surface of the valve cover 1215 and the annular flange 1221 to the second liquid outlet 124, so that the second fluid passage is cut off.

In the examples illustrated in FIGS. 2 to 5, the main valve cylinder 1112 has a large axial length to accommodate the entire piston 112. The pilot valve seat 1214 is designed as a stepped structure with diameters that decrease progressively in the radial inward direction. The middle portion of the pilot valve seat 1214 is an axial protrusion 1217 protruding toward the piston 112 and inserted into the piston chamber 1121. The first elastic member 115 is sleeved on the outside of the axial protrusion 1217, the second elastic member 120 of the pilot valve 12 is disposed inside the axial protrusion 1217, the pilot cone 122 is inserted into the axial protrusion 1217, the axial protrusion 1217 and the pilot cone 122 jointly define the pilot chamber 126, and the second elastic member 120 is disposed in the pilot chamber 126.

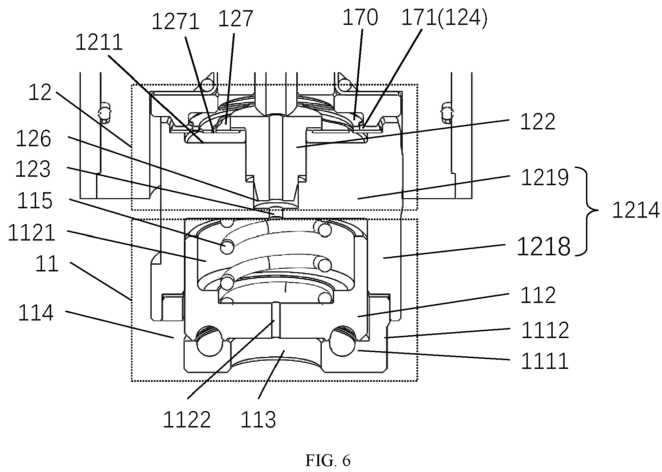

In another example illustrated in FIG. 6, the main valve cylinder 1112 has a small axial length, and the main valve cylinder1112 and an axially extending outer cylinder1218 of the pilot valve seat 1214 jointly accommodate the entire piston 112. In this example, the portion of the pilot valve seat 1214 disposed on the inner side of the axially extending outer cylinder1218 is a platform 1219 having a flat lower surface and a flat upper surface. The platform 1219 does not insert into the piston chamber 1121, thus does not occupy the space in the piston chamber 1121. As a result, the piston chamber 1121 in this example shown in FIG. 6 can accommodate more hydraulic fluid compared to the previous example shown in FIGs. 2 to 5. In this example, the pilot cone 122 is inserted into the platform 1219, and the platform 1219 and the pilot cone 122 jointly define the pilot chamber 126. The platform 1219 may not be provided with the second elastic member 120, that is, the second elastic member 120 may be omitted from the pilot chamber 126.

In the example illustrated in FIG. 6, a discharge orifice disc 170 is provided to replace the valve cover 1215 shown in the examples of FIGS. 2 to 5. The discharge orifice disc 170 is fixed between the housing 131 of the electromagnet 13 and the pilot valve seat 1214. The discharge orifice disc 170 is provided with at least two discharge orifices 171 which are arranged circumferentially between the housing 131 and the pilot valve seat 1214 and are spaced apart from each other. These discharge orifices 171 serve as the second liquid outlet 124. By providing at least two discharge orifices 171, sufficient fluid outlet area can be achieved.

In the example of FIG. 6, the elastic retainer 127 is also a spring disc, which is clamped between the discharge orifice disc 170 and the pilot valve seat 1214. The flow hole 1271 on the spring disc is located radially inside the discharge orifice disc 170, for communicating the pilot chamber 126 with the plurality of discharge orifices 171 (i.e., establishing fluid communication between the second orifice 123 and the second liquid outlet 124). Since the example illustrated in FIG. 6 eliminates the safety orifice disc 129 illustrated in FIGS. 2 to 5, the configuration in FIG. 6 does not have a fail-safe mode.

According to embodiments of a second aspect of the present disclosure, there is provided a hydraulic damper 200, which includes the electromagnetic relief valve 100 according to the embodiments of the first aspect of the present disclosure.

The structure, the working principle and the advantageous effects of the electromagnetic relief valve 100 according to the second aspect of the embodiments of the present disclosure have been described in detail in the embodiment according to the first aspect, and will not be repeated here.

Those described are only embodiments of the present disclosure, and are not intended to limit the present disclosure. Various changes and variations can be made to the present disclosure by those skilled in the art. Any modification, equivalent substitution, improvement, etc. made within the spirit and the principle of the present disclosure should be included in the scope of the claims of the present disclosure.

## Claims

1. An electromagnetic relief valve, comprising:
a main valve comprising a liquid inlet, a first liquid outlet, and a piston for cutting off or opening fluid communication between the liquid inlet and the first liquid outlet, wherein the piston comprises a piston chamber and a first orifice that fluidly communicates the piston chamber with the liquid inlet;
a pilot valve comprising a second orifice, a second liquid outlet, and a pilot cone for cutting off or opening fluid communication between the second orifice and
the second liquid outlet, wherein the second orifice is in fluid communication with the piston chamber; and
an electromagnet configured to apply, in response to different currents applied thereto, an electromagnet force of different magnitudes to the pilot cone;
wherein the pilot cone is configured to open or cut off the fluid communication between the second orifice and the second liquid outlet by moving in response to a change in the electromagnet force, so as to cause a change in a fluid pressure of working fluid in the piston chamber, and the piston is configured to open or cut off the fluid communication between the liquid inlet and the first liquid outlet by moving in response to the change in the fluid pressure in the piston chamber.

2. The electromagnetic relief valve according to claim 1, wherein the electromagnet is configured to apply a preset maximum force to the pilot cone in response to a preset maximum current applied thereto, causing the pilot cone to cut off the fluid communication between the second orifice and the second liquid outlet, and causing the piston to cut off the fluid communication between the liquid inlet and the first liquid outlet; and
the electromagnet is configured to apply a preset small force to the pilot cone in response to a preset lower current less than the preset maximum current, causing the pilot cone to open the fluid communication between the second orifice and the second liquid outlet, and causing the piston to open the fluid communication between the liquid inlet and the first liquid outlet.

3. The electromagnetic relief valve according to claim 1 or 2, wherein the main valve comprises a main valve housing, the piston is slidably disposed in the main valve housing along an axis, the main valve housing and the piston jointly define a first outflow passage extending from the liquid inlet to the first liquid outlet, and the piston is configured to cut off or open the first outflow passage by sliding along the axis in response to the change of the fluid pressure in the piston chamber.

4. The electromagnetic relief valve according to claim 3, wherein the sliding of the piston in a direction of opening the first outflow passage is driven by a piston opening force applied to the piston by the working fluid from the liquid inlet; and the sliding of the piston in a direction of cutting off the first outflow passage is driven by a piston closing force applied to the piston by the working fluid in the piston chamber.

5. The electromagnetic relief valve according to claim 3 or 4, wherein the piston has a lower pressure-receiving surface and an upper pressure-receiving surface which are substantially perpendicular to the axis and opposite to each other, an area of the upper pressure-receiving surface is larger than that of the lower pressure-receiving surface, the lower pressure-receiving surface faces the liquid inlet to receive the piston opening force, and the upper pressure-receiving surface faces the piston chamber to receive the piston closing force.

6. The electromagnetic relief valve according to any one of claims 1 to 5, wherein the pilot valve comprises a pilot valve housing, the pilot cone is slidably disposed in the pilot valve housing along an axis, the pilot valve housing and the pilot cone jointly define a second outflow passage extending from the second orifice to the first liquid outlet, and the pilot cone is configured to cut off or open the second outflow passage by sliding along the axis in response to the change in the electromagnet force.

7. The electromagnetic relief valve according to claim 6, wherein the sliding of the pilot cone in a direction of opening the second outflow passage is driven at least by a pilot cone opening force applied to the pilot cone by the working fluid from the second orifice; and
the sliding of the pilot cone in a direction of cutting off the second outflow passage is driven by the electromagnet force applied by the electromagnet.

8. The electromagnetic relief valve according to claim 7, wherein the pilot valve further comprises an elastic retainer, an annular flange is provided at an end of the pilot cone away from the second orifice, the pilot valve housing has a supporting surface opposite to the annular flange, and the elastic retainer is disposed between the annular flange and the supporting surface and applies an elastic retaining force to the pilot cone in the same direction as the pilot cone opening force.

9. The electromagnetic relief valve according to claim 8, wherein the elastic retainer is a spring disc, which extends annularly around the pilot cone and is provided with a flow hole through which the second outflow passage passes.

10. The electromagnetic relief valve according to any one of claims 6 to 9, wherein the pilot valve further comprises a safety outlet, and the pilot valve housing and the pilot cone further jointly define a safety outflow passage extending from the second orifice to the safety outlet; and
the sliding of the pilot cone when the electromagnet fails causes the second outflow passage to be cut off and the safety outflow passage to be opened.

11. The electromagnetic relief valve according to claim 10, wherein the pilot valve housing comprises a first abutment portion located on a common path shared by the second outflow passage and the safety outflow passage, and a second abutment portion located on the path of the second outflow channel but not on the path of the safety outflow passage; and
the pilot cone is slidable between the first abutment portion and the second abutment portion along the axis, an abutment between the pilot cone and the first abutment portion closes both the second outflow passage and the safety outflow passage, an abutment between the pilot cone and the second abutment portion closes the second outflow passage and does not close the safety outflow passage, and a separation of the pilot cone from the first abutment portion and the second abutment portion at least opens the second outflow channel.

12. The electromagnetic relief valve according to claim 10 or 11, wherein the pilot valve further comprises a safety orifice disc, which is located in the path of the safety outflow passage and extends annularly around the pilot cone, the safety orifice disc is fixedly attached to the pilot valve housing and provided with an orifice, and the orifice and the pilot valve housing jointly define the safety outlet; or
the pilot valve further comprises an elastic member disposed in the pilot valve housing, the pilot cone is located between the electromagnet and the elastic member, and the sliding of the pilot cone when the electromagnet fails is driven at least by the elastic member.

13. The electromagnetic relief valve according to any one of claims 1 to 12, wherein the pilot valve comprises:
a pilot valve seat, wherein a pilot chamber is formed inside the pilot valve seat and communicated with the piston chamber through the second orifice, and the pilot cone is slidably inserted into the pilot chamber along an axis;
a valve cover located between the electromagnet and the pilot valve seat, wherein the pilot cone is located between the valve cover and the pilot chamber, a plunger of the electromagnet passes through the valve cover to apply the electromagnet force to the pilot valve, and the second liquid outlet is provided on the valve cover;
an elastic retainer fixedly attached to the pilot valve seat and located outside the pilot chamber, for applying an elastic retaining force to the pilot cone; and
a safety orifice disc fixed between the pilot valve seat and the valve cover and provided with an orifice, wherein the orifice, an outer edge of the pilot valve seat and an outer edge of the valve cover jointly defines a safety outlet.

14. The electromagnetic relief valve according to any one of claims 1 to 12, wherein the pilot valve comprises:
a pilot valve seat, wherein a pilot chamber is formed inside the pilot valve seat and communicated with the piston chamber through the second orifice, and the pilot cone is slidably inserted into the pilot chamber along an axis;
a discharge orifice disc, which is fixed between the electromagnet and the pilot valve seat, and is provided with at least two discharge orifices located between the electromagnet and the pilot valve seat, wherein the at least two discharge orifices form the second liquid outlet; and
an elastic retainer fixedly attached to the pilot valve seat and located outside the pilot chamber, for applying an elastic retaining force to the pilot cone.

15. A hydraulic damper, comprising:
an inner tube disposed along a center line and provided with a communication hole;
a piston assembly slidably disposed in the inner tube along the center line and attached to a piston rod that leads to an exterior of the hydraulic damper through a sealed piston rod guide, wherein the piston assembly divides the inner tube into a rebound chamber and a compression chamber, and the piston assembly comprises a first compression valve assembly and a first rebound valve assembly to control the flow of working fluid passing between the rebound chamber and the compression chamber;
a base valve assembly located at an end of the compression chamber, wherein the base valve assembly is provided with a second compression valve assembly and a second rebound check valve assembly, to control the flow of working fluid passing between the compression chamber and the reservoir chamber;
an intermediate tube disposed radially outside the inner tube and forming an annular chamber therebetween, wherein both ends of the intermediate tube are in sealed connection with the inner tube, the annular chamber is communicated with the rebound chamber through the communication hole disposed on the inner tube, and the intermediate tube is provided with an outlet communicated with the annular chamber;
an outer tube disposed radially outside the intermediate tube and forming the reservoir chamber therebetween; and
at least one electromagnetic relief valve according to any one of claims 1 to 14, which is located outside the outer tube and attached to the outer tube, wherein the liquid inlet of the electromagnetic relief valve is communicated with the outlet, and the first liquid outlet and a second liquid outlet of the electromagnetic relief valve are communicated with the reservoir chamber.
